Europäisches Patentamt

European Patent Office

Office européen des brevets

(19)

(11) Veröffentlichungsnummer: **0 152 772**
**B1**

(12) # EUROPÄISCHE PATENTSCHRIFT

(45) Veröffentlichungstag der Patentschrift:
**22.06.88**

(51) Int. Cl.⁴: **G 05 B 19/405**

(21) Anmeldenummer: **85100538.9**

(22) Anmeldetag: **19.01.85**

(54) **Verfahren zum Erzeugen von Werkstückkonturen.**

(30) Priorität: **03.02.84 DE 3403677**

(43) Veröffentlichungstag der Anmeldung:
**28.08.85 Patentblatt 85/35**

(45) Bekanntmachung des Hinweises auf die Patenterteilung:
**22.06.88 Patentblatt 88/25**

(84) Benannte Vertragsstaaten:
**AT CH DE FR GB IT LI NL SE**

(56) Entgegenhaltungen:
**EP - A - 0 083 836**
**EP - A - 0 089 562**
**EP - A - 0 124 615**
**EP - A - 0 129 092**
**EP - A - 0 130 219**
**FR - A - 2 512 982**

(73) Patentinhaber: **Dr. Johannes Heidenhain GmbH,
Nansenstrasse 17, D-8225 Traunreut (DE)**

(72) Erfinder: **Gorski, Werner, Lambergstrasse 6,
D-8221 Haslach (DE)**
Erfinder: **Huber, Josef, Andreasstrasse 1,
D-8261 Engelsberg (DE)**

**Beschreibung**

Die Erfindung bezieht sich auf ein Verfahren zur grafischen Darstellung eines auf einer numerisch gesteuerten Werkzeugmaschine herzustellenden Werkstücks nach dem Oberbegriff des Anspruchs 1.

Aus der DE-OS 32 34 426 ist es bekannt, dass man das bearbeitete Werkstück enstprechend der Zeichnungsinformation am Bildschirm einer NC-gesteuerten Bearbeitungsmaschine darstellt und den Weg des Werkzeuges in einer bestimmten Farbe in Form einer kontinuierlichen Linie überlagert.

Eine Simulation der Bearbeitung des Werkstükkes vom Rohling bis zum fertigen Werkstück ist dort nicht vorgesehen.

Aus der EP-A2-89 562 ist es bekannt, die Kontur eines bearbeiteten Werkstückes mit der Kontur des Werkstückrohlings zu überlagern und an dem Bildschirm einer NC-Maschine darzustellen.

Aus der EP-A2-83 836 ist bekannt, die Bewegung eines Werkzeuges am Bildschirm einer NC-Maschine anzuzeigen. Dadurch wird erkennbar, wie weit das Werkstück bereits bearbeitet worden ist.

Aus der Technik des CAD (Computer Aided Design) ist es bekannt, Werkstücke grafisch darzustellen, bei denen verdeckte Kanten nicht dargestellt werden.

Dazu ist ein sehr hoher apparativer und rechnerischer Aufwand erforderlich, wie er bei NC-gesteuerten Werkzeugmaschinen, deren Steuerungen auf Mikroprozessor-Basis aufgebaut sind, nicht möglich ist.

Es besteht jedoch auch bei diesen relativ einfachen Einrichtungen das Bedürfnis, die Werkstückbearbeitung zu simulieren, um so die Programmierung zu überprüfen und ggf. zu korrigieren, ohne dass tatsächlich ein teures Werkstück angefertigt werden muss. Die Simulation des Bearbeitungsvorganges soll dabei verständlicherweise möglichst schnell erfolgen.

Der Erfindung liegt die Aufgabe zugrunde, ein Verfahren anzugeben, mit dessen Hilfe die Datenstruktur für die Darstellung eines Werkstückes, das durch Bearbeiten verändert werden soll, auf einfache und schnelle Weise zu erzeugen ist, so dass auch bei numerisch gesteuerten Werkzeugmaschinen eine gute bildliche Darstellung möglich ist.

Diese Aufgabe wird durch die Merkmale des im Anspruch 1 angegebenen Verfahrens gelöst.

Die Vorteile des erfindungsgemässen Verfahrens liegen darin, dass kein so grosser rechnerischer und apparativer Aufwand für die Ermittlung der Datenstruktur eines rechnerinternen Modelles notwendig ist, wie beispielsweise bei CAD-Systemen, und dass dennoch eine bessere Darstellung des Werkstückes erfolgen kann, als beim Stand der Technik der NC-gesteuerten Maschinen.

Beispielhaft soll das erfindungsgemässe Verfahren anhand der Zeichnungen erläutert werden.

Es zeigen:

Figur 1 die Vorderansicht eines Werkstückes, das am Bildschirm dargestellt werden soll,

Figur 2 die Draufsicht auf das Werkstück gemäss Figur 1 mit Schnittkennzeichnung,

Figur 3 ein perspektivisches Bild, wie es der Darstellung am Bildschirm entspricht,

Figur 4 ein Schnittbeispiel und

Figur 5 eine schematische Darstellung von Werkstück und Werkzeug anhand ihrer Datenstruktur.

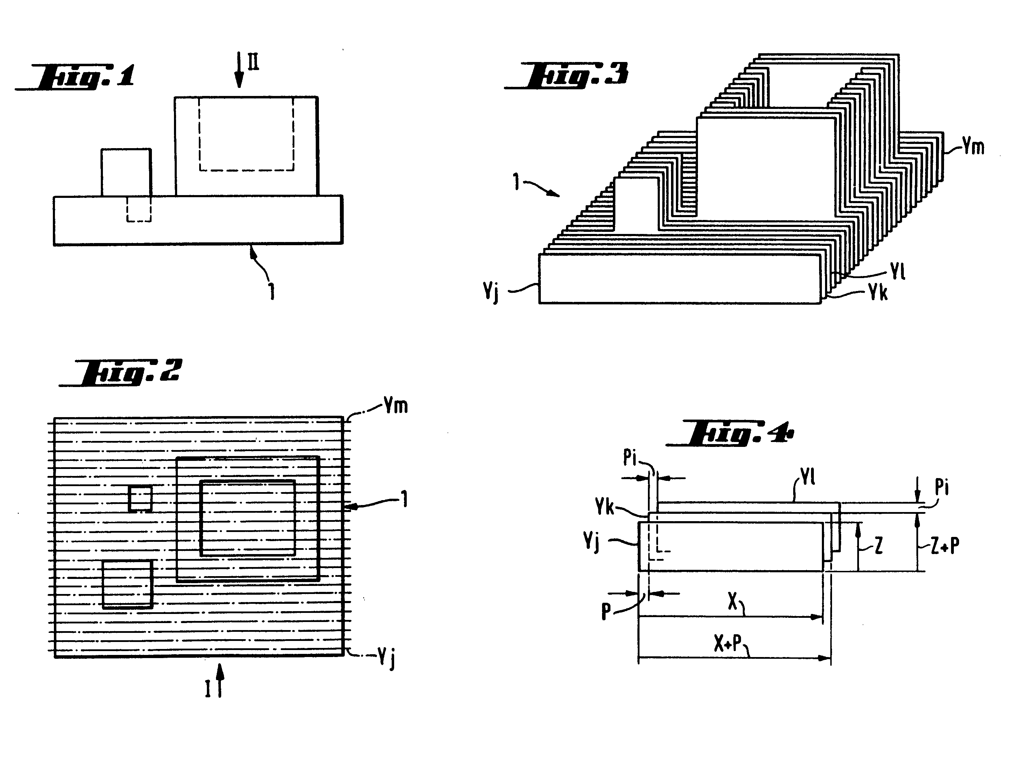

Bevor auf die Figuren 1 bis 4 eingegangen wird, soll speziell die Darstellung in Figur 5 erläutert werden:

Ein beliebiges Werkstück, etwa ein Quader 2, hat eine Grundfläche und eine bestimmte Höhe. Um den Quader 2 am Bildschirm einer NC-gesteuerten Maschine darstellen zu können, werden die Abmessungen des Quaders 2 und seine Lage im Raum agespeichert. Die Speicherung erfolgt in einem sogenannten Bildpunktspeicher, bei dem für jeden Bildpunkt am Rasterbildschirm der Steuerung ein Speicherplatz vorgesehen ist, so dass der Bildpunktspeicher ebenfalls ein Raster enthält. Durch die Aufteilung des Speichers in einzelne Rasterpunkte ist jeder Speicherplatz durch die Angabe seiner Koordinaten in X und Y adressierbar.

Wenn nun der Quader 2 abgespeichert werden soll, wird ihm das Raster des Bildpunktspeichers in Form von X-/Y-Koordinaten aufgeprägt. Jeder Punkt der Grundfläche des Quaders 2 wird durch Belegung der Speicherplätze $X_i$ bis $X_n$ und $Y_j$ bis $Y_m$ gespeichert. Die Höhe des Quaders 2 wird durch die Z-Koordinate bestimmt, die im Falle des Quaders 2 als ein und dieselbe Zahl an jedem Rasterpunkt (Speicherplatz) gespeichert ist.

Die Datenstruktur ist demgemäss durch die X-, Y-Koordinaten und eine Zahl als Höhe bestimmt und im Speicher abgelegt.

Um nun die Kontur des bearbeiteten Werkstükkes 2 räumlich zu ermitteln, muss sukzessive eine sich verändernde Datenstruktur erzeugt werden.

Zu diesem Zweck wird der Querschnitt des Werkzeuges 3 genauso in Rasterpunkte aufgeteilt, wie die Grundfläche des Quaders 2. Wenn der Querschnitt des Werkzeuges 3 entlang seiner vorprogrammierten Bahn bewegt wird, entsteht ein sogenanntes Bearbeitungspolygon, das in Rasterpunkte aufgeteilt ist.

Das Werkzeug 3 bewegt sich entlang seiner Bahn in der vom Programm festgelegten Bearbeitungstiefe, die jeweils einem bestimmten, jedoch veränderbaren Zahlenwert in der Z-Achse entspricht. All diese Daten sind vorgegeben und müssen mit der Datenstruktur für das Werkstück 2 verknüpft werden, woraus eine resultierende Datenstruktur entsteht, die dem bearbeiteten Werkstück 2 als rechnerinternes Modell entspricht.

Die Verknüpfung erfolgt in ganz einfacher Weise, indem von jedem Rasterpunkt in der X-/Y-Ebene der Zahlenwert für die Z-Koordinate mit dem Zahlenwert der Z-Koordinate des Werkzeuges 3 verglichen wird, wenn einer der Rasterpunkte, die im Bearbeitungspolygon enthalten sind, in den Bereich des Rasters gelangt, der durch X-/Y-Koordinaten des Werkstückes 2 belegt ist. Dabei muss natürlich die Bearbeitungstiefe des Werkzeuges 3 auf die Ebene bezogen werden, in der die Grundfläche des Quaders 2 angeordnet ist.

In der Praxis sieht das so aus, dass an jedem Rasterpunkt des Werkstückes 2 die Höhe des Werkstückes 2 mit dem Abstand des zugehörigen Rasterpunktes des Werkzeuges 3 von der X-/Y-Ebene verglichen wird. Ist nun der Abstand dieses Rasterpunktes von der X-/Y-Ebene kleiner als die Höhe des Rasterpunktes des Werkstückes 2, so würde das Werkzeug 3 bei der Bearbeitung Material abtragen, und es entstünde eine neue Kontur, also auch eine veränderte Datenstruktur.

Ergibt der vorbeschriebene Vergleich jedoch, dass die Höhe des Werkstückes 2 an diesem Rasterpunkt kleiner ist, als er Abstand des Werkzeuges 3 von der X-/Y-Ebene an dieser Stelle, so würde das Werkzeug 3 nicht in Eingriff kommen und die Kontur des Werkstückes 2 nicht verändert. Dieser Fall kann eintreten, wenn bereits «Bearbeitungsvorgänge» vorangegangen sind.

Durch die vorbeschriebene erfindungsgemässe Verknüpfung der Daten für das Werkstück 2 mit den Daten für das Werkzeug 3 mittels Auflösung in ein gemeinsames Raster in parallelen Ebenen und die Ermittlung der dritten Dimension durch rechnerischen Zahlenvergleich an jedem Rasterpunkt, wird die Erzeugung einer resultierenden Datenstruktur erheblich vereinfacht.

Das erfindungsgemässe Verfahren ermöglicht daher die Simulation von Werkstückbearbeitung an relativ einfachen NC-gesteuerten Maschinen und deren grafische Darstellung, beispielsweise am Bildschirm einer mikroprozessorgesteuerten Werkzeugmaschine.

Die nachfolgende Beschreibung der Figuren 1 bis 4 bezieht sich auf ein besonders vorteilhaftes Verfahren zur Darstellung eines Gegenstandes, dessen Datenstruktur nach dem vorbeschriebenen Verfahren ermittelt ist.

In der Figur 1 ist ein Werkstück 1 abgebildet, wie es in technischen Zeichnungen dargestellt wird. Alle sichtbaren Kanten sind gemäss der genormten Vorschriften für technische Zeichnungen mit vollen, durchgehenden Linien gezeichnet. Alle Kanten, die in dieser Vorderansicht nicht sichtbar wären, sind durch dünnere, unterbrochene Linien gezeichnet, wie es ebenfalls durch die Zeichnungsvorschriften bestimmt ist.

Das abgebildete Werkstück 1 stellt einen Gegenstand dar, der auf einer numerisch gesteuerten Werkzeugmaschine hergestellt werden soll. Um dieses Werkstück 1 aus einem Rohling herstellen zu können, muss in bekannter Weise ein Programm für die NC-Maschinen erstellt werden. Das Programm wird anhand der technischen Zeichnung des fertigen Werkstückes 1 in Form von Programmdaten und -befehlen in die NC-Steuerung eingespeist.

Um Programmierfehler ohne Fertigung von Ausschusswerkstücken herausfinden zu können, soll das Werkstück 1, wie es gemäss Programm aus dem Rohling entstehen würde, am Bildschirm der NC-Steuerung der Werkzeugmaschine dargestellt werden. Am eindrucksvollsten geschieht das durch eine perspektivische Darstellung, ohne verdeckt liegende Kanten zu zeigen.

Diese Darstellung erfolgt vorteilhaft in der Weise, dass das Werkstück 1 in eine Serie von Schnitten «zerlegt» wird, die perspektivisch versetzt angezeigt werden.

In Figur 2 ist anhand der Werkstückdraufsicht gezeigt, wie die parallelen Schnitte Yj bis Ym verlaufen. Durch jeden dieser Schnitte Yj bis Ym entsteht eine Schnittebene, deren Fläche dem Querschnitt des Werkstückes 1 in der jeweiligen Schnittebene entspricht. Die Kontur jeder dieser Flächen ist ein Polygon, dessen Koordinaten im Speicher der Steuerung in Form von Daten abgelegt sind.

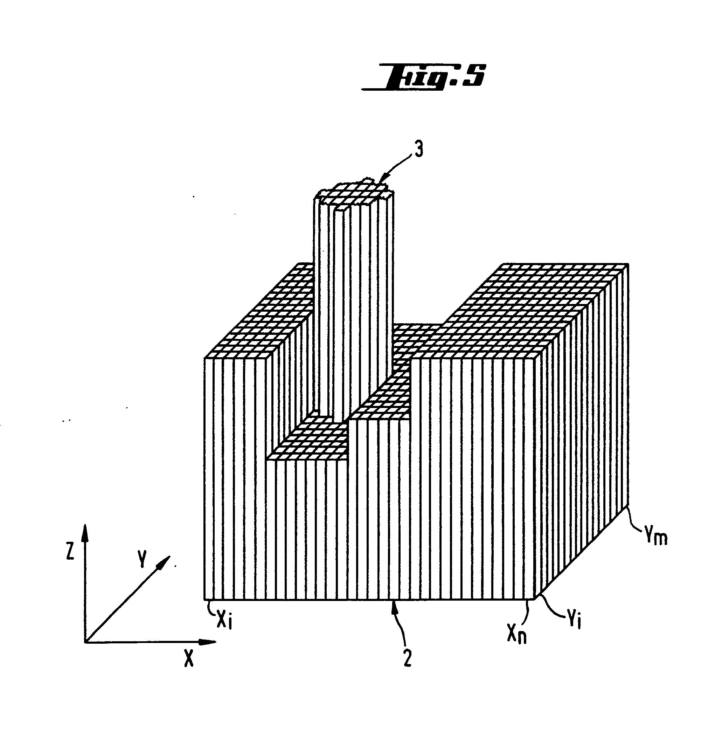

Figur 3 zeigt das fertig aufgebaute Bild des Werkstückes 1, wie es der perspektivischen Bildschirmdarstellung entspräche.

Der Bildaufbau erfolgt sukzessive, indem die Daten des ersten Polygons — die der ersten Schnittebene Yj entsprechen — aus dem Speicher entnommen und einem Grafikprozessor zugeführt werden, der die Anzeige am Bildschirm veranlasst.

Durch die Koordinate Yj ist festgelegt, dass dieses Polygon sich in der Yj-Ebene befindet. Die weiteren Daten geben die Ausdehung des Polygons in X-Richtung — also die Breite- sowie die Ausdehnung in Z-Richtung — also die Höhe — an. Der Betrag für die Höhe kann sich dabei in einem Bereich von der maximalen Rohlingshöhe bis zur Höhe «Null» befinden, wenn alles Material des Rohlings an dieser Stelle abgetragen wurde.

Die Darstellung des Polygons der nächsten Schnittebene erfolgt bei der Koordinate Yk. Das Polygon an der Schnittebene Yk soll perspektivisch versetzt dargestellt werden, um dem Bild des Gegenstandes einen räumlichen Eindruck zu verleihen.

Da aber verdeckt liegende Kanten nicht angezeigt werden sollen, muss das Polygon der neuen Schnittebene Yk daraufhin überprüft werden, ob unter Berücksichtigung des perspektivischen Versatzes irgendein Bereich der Kontur des neuen Yk-Polygons über die Kontur des Yj-Polygones herausragt. Nur wenn die Kontur des aktuellen Polygons eine der Konturen der bereits dargestellten Polygone überragt, wird dieser Bereich auch dargestellt. So ist sichergestellt, dass Kanten eines nachfolgend darzustellenden Polygons nur angezeigt werden, wenn sie zumindest eine der bereits abgebildeten Schnittebenen überragen.

Die Feststellung, ob die Kontur von bereits abgebildeten Schnittebenen überragt wird, kann leicht im Rechner überprüft werden, da lediglich ein Vergleich der Koordinatenwerte stattfinden muss, und zwar unter Berücksichtigung des aktuellen perspektivischen Versatzes.

Das in Figur 4 gezeigte einfache Schnittbeispiel soll dies verständlicher machen: Ein Polygon Yj der ersten Schnittebene ist abgebildet. Es hat in X-Richtung die Breite X und in Z-Richtung die Höhe Z. Um den Gegenstand räumlich erscheinen zu lassen, soll das Polygon Yk der zweiten Schnittebene um zwei Bildpunkte entsprechend dem Rasterbildschirm in X-/ und Z-Richtung versetzt dargestellt werden.

Da der Gegenstand an der Stelle der zweiten Schnittebene Yk noch immer die Breite X und die Höhe Z hat, muss gemäss der Erfindung die Darstellung so erfolgen, dass der perspektivische Versatz P bei der Berechnung und Darstellung berücksichtigt werden. Die obere Kante des zweiten Polygons Yk weist also die Koordinaten Z + P als Höhe auf, ist damit grösser als die Höhe Z des ersten Polygons Yj und muss demnach dargestellt werden. Die rechte Kante des zweiten Polygons Yk hat die Koordinate X + P als Breite, ist somit grösser als X und wird dargestellt.

Die linke Kante des Polygons Yk wird soweit dargestellt, wie ihre Höhe Z + P grösser ist als die Höhe Z des Polygons Yj der ersten Schnittebene, also um den Betrag des perspektivischen Versatzes P. Genauso verhält es sich mit der Darstellung der unteren Kante des Polygons Yk.

Diese einfache Ermittlung der darzustellenden Kanten der einzelnen Polygone macht das erfindungsgemässe Verfahren so schnell und so leicht durchführbar, dass es auch auf verhältnismässig einfachen Mirkoprozessorsystemen durchgeführt werden kann.

## Patentansprüche

1. Verfahren zur grafischen Darstellung eines auf einer numerisch gesteuerten Werkzeugmaschine herzustellenden Werkstücks (1, 2), mit einer in einem Bildpunktrasterformat arbeitenden Anzeigeeinheit, Speichermitteln mit den Bildpunkten des Rasters zugeordneten Speicherplätzen und einer an den Speichermitteln angeschlossenen Datenverarbeitungseinheit, dadurch gekennzeichnet, dass in die den Rasterpunkten zugeordneten Speicherplätzen der Speichermittel Abmessungsdaten für einen Werkstückrohling eingeschrieben werden, die, bezogen auf eine durch zwei Koordinatenachsen (X, Y) eines dreidimensionalen Koordinatensystems (X, Y, Z) festgelegte Bezugsebene, die Abmessungen des Werkstückrohlings in Richtung der dritten Koordinatenachse (Z) des Koordinatensystems (X, Y, Z) repräsentieren, dass die Datenverarbeitungseinheit aus Daten über Querschnittsabmessungen des Werkzeugs (3) und dessen Bewegungsbahn schrittweise aufeinanderfolgend an den Rasterpunkten Abstandsdaten eines Bearbeitungspolygons des Werkzeugs (3) ermittelt, die den Abstand des Bearbeitungspolygons von der Bezugsebene in Richtung der dritten Koordinatenachse (Z) repräsentieren, dass die Datenverarbeitungseinheit die in den Speichermitteln für die einzelnen Rasterpunkte gespeicherten Abmessungsdaten mit den für das Bearbeitungspolygon ermittelten Abstandsdaten schrittweise aufeinanderfolgend zahlenmässig vergleicht und die gespeicherten Abmessungsdaten durch die Abstandsdaten des Bearbeitungspolygons ersetzt, wenn das Bearbeitungspolygon und das den gespeicherten Abmessungsdaten entsprechende Werkstück (1, 2) einander überlappen, und dass die Anzeigeeinheit für eine den momentan gespeicherten Daten entsprechende Darstellung des Werkstücks (1, 2) über einen Grafikprozessor angesteuert wird.

2. Verfahren nach Anspruch 1, dadurch gekennzeichnet, dass die resultierenden Gebildedaten abgespeichert und an einer Anzeigeeinheit in Form eines Gebildemodells mehrdimensional abgebildet werden.

3. Verfahren nach den Ansprüchen 1 und 2, dadurch gekennzeichnet, dass die Abbildung des Gebildemodells zweidimensional in mehreren Ansichten erfolgt.

4. Verfahren nach den Ansprüchen 1 und 2, dadurch gekennzeichnet, dass die Abbildung des Gebildemodells räumlich durch Parallelprojektion erfolgt.

5. Verfahren nach den Ansprüchen 1 und 4, wobei die Darstellung des Gebildes mit Hilfe von in einem Rechner gespeicherten Daten von Schnittflächen aus parallelen Schnitten des Gebildes erfolgt, wobei verdeckte Kanten in der Darstellung des Gebildes rechnerisch eliminiert sind, dadurch gekennzeichnet, dass die Schnittflächen (Yj bis Ym) mit einem vorgegebenen perspektivischen Versatz sukzessive hintereinander dargestellt werden, wobei die Darstellung einer Schnittfläche (Yj bis Ym) nur dort erfolgt, wo sie die Kontur einer vorab dargestellten Schnittfläche unter Berücksichtigung des perspektivischen Versatzes überragt.

6. Verfahren nach Anspruch 5, dadurch gekennzeichnet, dass die Überprüfung der Zulässigkeit der Darstellung von Konturen einer aktuellen Schnittfläche (Y1) durch einfachen Vergleich der aktuellen Koordinantendaten mit den Koordinatendaten der bereits dargestellten Schnittflächen (Yj bis Yk) erfolgt, wobei die aktuellen Koordinatendaten der Schnittfläche (Y1) die Abmessungen des Gebildes (1), die Lage der Schnittfläche (Y1) in der Schnittserie (Yj bis Ym) und den aktuellen perspektivischen Versatz (Pi) beinhalten.

## Claims

1. Method of graphical representation of a workpiece (1, 2) to be produced on a numerically controlled machine tool, with a display unit operating in an image point raster format, storage means with storage locations corresponding to the image points of the raster and a data processing unit connected to the storage means, characterised in that dimensional data for a workpiece blank are written into the storage locations of the storage means corresponding to the raster points, which data, referenced to a reference plane defined by two coordinate axes (X, Y) of a three dimensional coordinate system (X, Y, Z), represent the dimensions of the workpiece blank in the direction of the third coordinate axis (Z) of the coordinate system (X, Y, Z), in that the data processing unit provides distance data of a working polygon of the workpiece (3), which represent the distance of the working polygon from the reference plane in the direction of the third coordinate axis (Z), from data on the cross-sectional dimensions of the workpiece (3) and whose path of movement follows stepwise on the raster points, in that the data processing unit compares the dimensional data stored in the storage means for the individual raster points numerically in stepwise sequence with the distance data provided for the working polygon and replaces the stored dimensional data by the distance data of the working polygon when the working polygon and the workpiece (1, 2) corresponding to the stored dimensional data overlap one another, and in that the display device is controlled by way of a graphics processor (4) for a representation of the workpiece (1, 2) corresponding to the instantaneously stored data.

2. Method according to claim 1, characterised in that the resultant picture data is stored and reproduced on a display unit in the form of a multidimensional picture model.

3. Method according to claims 1 and 2, characterised in that the representation of the picture model takes place two dimensionally in a plurality of views.

4. Method according to claims 1 and 2, characterised in that the representation of the picture model takes place in space by parallel projection.

5. Method according to claims 1 and 4, wherein the representation of the picture takes place with the aid of data on section surfaces of parallel sections of the picture stored in a computer, wherein obscured edges in the representation of the picture are eliminated by calculation, characterised in that the section surfaces (Yj to Ym) are represented one after the other in succession with a predetermined perspective stagger, wherein the representation of a section surface (Yj to Ym) only takes place where it projects over the contour of a previously represented section surface, having regard to the perspective stagger.

6. Method according to claim 5, characterised in that the checking of the permissibility of the representation of contours of an actual section surface (Y1) takes place by simple comparison of the actual coordinate data with the coordinate data of the section surfaces (Yj to Yk) already represented, wherein the actual coordinate data of the section surface (Y1) comprise the dimensions of the picture (1), the position of the section surface (Y1) in the section series (Yj to Ym) and the actual perspective displacement (Pi).

**Revendications**

1. Procédé pour la representation graphique d'une pièce (1, 2) à usiner sur une machine-outil à commande numerique, avec une unité d'affichage travaillant dans un format de trame de points d'image des moyens de mémorisation comprenant des emplacements de mémoire attribués aux points d'image de la trame, et une unité de traitement de données reliée aux moyens de mémorisation, caractérisé en ce que dans les emplacements de mémoire des moyens de mémorisation attribués aux points de la trame sont inscrites des données dimensionnelles pour une pièce à usiner brute, données qui représentent, par rapport à un plan de référence déterminé par deux axes de coordonnées (x, y) d'un système de coordonnées (x, y, z) tridimensionnel, les dimensions de la pièce à usiner brute dans la direction du troisième axe (z) du système de coordonnées (x, y, z) que l'unité de traitement de données détermine, à partir de données sur les dimensions de section transversale de l'outil (3) et sur la trajectoire de déplacement de ce dernier, successivement pas à pas aux points de la trame des données de distance de polygone d'usinage de l'outil (3), qui représentent la distance du polygone d'usinage du plan de référence dans la direction du troisième axe (z) de coordonnées, que l'unité de traitement de données compare du point de vue numérique successivement pas à pas les données dimensionelles mémorisées dans les moyens de mémorisation pour les points de trame individuels avec les données de distance déterminées pour le polygone d'usinage et remplace les données dimensionelles mémorisées par les données de distance du polygone d'usinage, si le polygone d'usinage et la pièce à usiner (1, 2) correspondant aux données dimensionnelles mémorisées se recouvrent mutuellement, et que l'unité d'affichage est commandée par un processeur graphique pour une représentation de la pièce à usiner (1, 2) correspondant aux données mémorisées momentanément.

2. Procédé selon la revendication 1, caractérisé en ce que les données résultantes de forme sont mémorisées et reproduites en plusieurs dimensions sur une unité d'affichage en tant que modèle de forme.

3. Procédé selon les revendications 1 et 2, caractérisé en ce que la représentation du modèle de forme se fait de manière bidimensionnelle en plusieurs vues.

4. Procédé selon les revendications 1 et 2, caractérisé en ce que la représentation du modèle de forme se fait dans l'espace par projection parallèle.

5. Procédé selon les revendications 1 et 4, caractérisé en ce que la représentation de la forme se fait à l'aide de données, mémorisées dans un calculateur, de surfaces de coupes parallèlles de la forme, des arètes cachées étant éliminées par le calcul de la représentation de la forme, caractérisé en ce que les surfaces de coupe (Yj à Ym) sont représentées, avec un décalage perspectif prédétermine, successivement les unes derrière les autres, la représentation d'une surface de coupe (Yj à Ym) ne se faisant qu'aux endroits où elle dépasse les contours d'une surface de coupe représentée préalablement, compte tenu du décalage perspectif.

6. Procédé selon la revendication 5, caractérisé en ce que la vérification de l'admissibilité de la représentation de contours d'une surface de coupe (Y1) actuelle se fait par simple comparaison des données de coordonnées actuelles avec les données de coordonnées des surfaces de coupe (Yj à Yk) déjà représentées, les données de coordonnées actuelles de la surface de coupe (Y1) contenant les dimensions de l'objet (1), la position de la surface de coupe (Y1) dans la série de coupes (Yj à Ym) et le décalage perspectif (Pi) actuel.

Fig. 1

Fig. 3

Fig. 2

Fig. 4

0 152 772

# Fig.5